# EUROPEAN PATENT APPLICATION

(11) **EP 2 169 751 A1**
(43) Date of publication of application: **31.03.2010**
(21) Application number: 08777215.8
(22) Date of filing: 13.06.2008
(51) Int. Cl.: H01M 8/02, H01M 4/88, H01M 8/10

(54) **MEMBRANE-ELECTRODE ASSEMBLY, METHOD FOR PRODUCING THE SAME AND SOLID POLYMER FUEL CELL**

(30) Priority: 15.06.2007 JP 2007159425
(71) Applicant: Sumitomo Chemical Company, Limited, Tokyo 104-8260 (JP)
(72) Inventor: SHINODA, Hiroshi, Niihama-shi Ehime 792-0002 (JP); KURITA, Hiroyuki, Tsukuba-shi Ibaraki 305-0045 (JP); SAITO, Shin, Tsukuba-shi Ibaraki 305-0822 (JP); KURODA, Ryuma, Komatsu-shi Ishikawa 932-0832 (JP)
(74) Representative: Vossius & Partner
(86) International application number: PCT/JP2008/060904
(87) International publication number: WO 2008/153153

(57) **Abstract**

A membrane-electrode assembly comprising an anode catalyst layer and cathode catalyst layer placed each other, and a polymer electrolyte membrane formed between the anode catalyst layer and cathode catalyst layer. The polymer electrolyte membrane comprises: a hydrocarbon-based polymer electrolyte, and the anode catalyst layer and cathode catalyst layer both comprise a catalyst-supported material, having at least one catalyst substance selected from among platinum and platinum-containing alloys and a support on which the catalyst substance is supported; and a polymer electrolyte. Either or both the anode catalyst layer and cathode catalyst layer have a catalyst-supporting ratio of 60 wt% or greater in the catalyst-supported material.

## Description

### Technical Field

The present invention relates to a membrane-electrode assembly and a method for producing it, and to a solid polymer fuel cell.

### Background Art

Polymer electrolyte membranes formed from polymer electrolytes with proton conductivity are used as electrolyte membranes for primary batteries, secondary batteries, solid polymer fuel cells and the like. The main polymer electrolytes currently being investigated for forming polymer electrolyte membranes are fluorine-based polymer electrolytes, including Nafion (registered trademark of DuPont Corp.), for example. However, polymer electrolyte membranes obtained from fluorine-based polymer electrolytes are problematic because of their exceedingly high cost, their low heat resistance and film strength, and their lack of practical strength without some sort of reinforcement.

In light of these circumstances, polymer electrolytes that are inexpensive and have excellent properties and can substitute for the aforementioned fluorine-based polymer electrolytes have been actively developed in recent years, and particular focus has been on hydrocarbon-based polymer electrolytes that are polymer electrolytes without fluorine atoms as constituent components of the polymer electrolyte. Polymer electrolyte membranes obtained from hydrocarbon-based polymer electrolytes are considered more practical than fluorine-based polymer electrolyte membranes because they can be inexpensively produced, they have high heat resistance to withstand operation at high temperature and they can be easily recycled.

Incidentally, a solid polymer fuel cell usually comprises a membrane-electrode assembly (hereinafter also referred to as "MEA") having a construction wherein electrodes known as catalyst layers (an anode catalyst layer and cathode catalyst layer) containing catalyst substances that promote oxidation-reduction reaction between hydrogen and oxygen are formed on either side of an electrolyte membrane, and gas diffusion layers for efficient supply of gas to the catalyst layers on the outer sides of the catalyst layers. The catalyst layers usually contain a catalyst-supported material, comprising a catalyst substance and a support supporting it, and a polymer electrolyte with proton conductivity. For improved electric power generation properties of fuel cells it has been found effective to smoothly promote the oxidation reaction on hydrogen and reduction reaction on oxygen in the catalyst layer, while also improving the polymer electrolyte membrane properties, and much research has been carried out toward increasing reaction efficiency in catalyst layers.

For example, Patent document 1 discloses a catalyst layer wherein the area-to-weight ratio and porosity of the polymer electrolyte or catalyst-supported material in the catalyst layer varies in the thickness direction of the catalyst layer. Also, Patent document 2 discloses a method for producing a catalyst layer characterized by treating the catalyst powder of the catalyst layer by electromagnetic wave or particle beam irradiation during the step of producing the catalyst layer.
[Patent document 1] Japanese Unexamined Patent Publication HEI No. 9-245802
[Patent document 2] Japanese Unexamined Patent Publication No. 2004-152593

### Disclosure of the Invention

### Problems to be Solved by the Invention

However, the electric power generation properties of fuel cells employing conventional MEAs, including those disclosed in Patent documents 1 and 2, have not necessarily been satisfactory and further improvement in electric power generation properties has been desired. In particular, it is highly desired to achieve further improvement in electric power generation properties under low-humidification environments, for fuel cells comprising polymer electrolyte membranes employing hydrocarbon-based polymer electrolytes, which are advantageous from the viewpoint of economy, heat resistance, mechanical strength and recycling properties.

It is therefore an object of the present invention to achieve further improvement in the electric power generation properties of fuel cells comprising polymer electrolyte membranes that employ hydrocarbon-based polymer electrolytes.

### Means for Solving the Problems

The present inventors have conducted much research focused on catalyst-supporting ratios of the catalyst layers, with the aim of achieving the object stated above. As a result, new knowledge was surprisingly learned, namely that a fuel cell comprising a polymer electrolyte membrane with a hydrocarbon-based polymer electrolyte exhibits markedly increased electric power generation performance if the supporting ratio of a platinum-containing catalyst-supported material is within a specified range. The present inventors have completed the invention based on this knowledge.

Specifically, according to one aspect, the invention relates to a membrane-electrode assembly comprising a mutually opposing anode catalyst layer and cathode catalyst layer, and a polymer electrolyte membrane formed between the anode catalyst layer and cathode catalyst layer. In the membrane-electrode assembly of the invention, the polymer electrolyte membrane comprises a hydrocarbon-based polymer electrolyte and the anode catalyst layer and cathode catalyst layer both comprise a catalyst-supported material, having at least one catalyst substance selected from among platinum and platinum-containing alloys and a support on which the catalyst substance is supported, and a polymer electrolyte, wherein the catalyst-supporting ratio of the catalyst-supported material is at least 60 wt% in either or both the anode catalyst layer and cathode catalyst layer.

With the membrane-electrode assembly of the invention it is possible to achieve further improvement in the electric power generation properties of fuel cells comprising polymer electrolyte membranes that employ hydrocarbon-based polymer electrolytes.

The hydrocarbon-based polymer electrolyte in the polymer electrolyte membrane is more preferably a block copolymer comprising a first block composed of a repeating unit with an ion-exchange group, and a second block composed essentially of a repeating unit with no ion-exchange group. This can result in an even more notable effect of improved electric power generation properties.

The polymer electrolytes in the anode catalyst layer and cathode catalyst layer of the membrane-electrode assembly of the invention are also preferably hydrocarbon-based polymer electrolytes. This will further improve the electric power generation properties while also increasing the durability under load during use.

According to another aspect, the invention relates to a method for production of a membrane-electrode assembly according to the invention as described above. The production method according to the invention comprises a step of forming an anode catalyst layer and/or cathode catalyst layer using a catalyst ink containing a solvent selected from among water and hydrophilic solvents, a catalyst substance and a hydrocarbon-based polymer electrolyte, wherein at least a portion of the hydrocarbon-based polymer electrolyte is dispersed in the solvent. In this case, preferably the catalyst ink is coated onto the polymer electrolyte membrane and the solvent is removed from the coated catalyst ink to form the catalyst layer.

According to this method it is possible to obtain a membrane-electrode assembly with more excellent durability, wherein the polymer electrolyte membrane is more resistant to partial dissolution during formation of the catalyst layer, compared to using a homogeneous solution. The catalyst ink is also preferably coated directly onto the polymer electrolyte membrane by spraying. Spraying will create more tightly bonded anchoring between the polymer electrolyte membrane and the catalyst layer, so that the electric power generation properties are further improved.

According to yet another aspect, the invention relates to a solid polymer fuel cell comprising a membrane-electrode assembly of the invention as described above. The solid polymer fuel cell of the invention can exhibit sufficiently excellent electric power generation properties while using a polymer electrolyte membrane comprising a hydrocarbon-based polymer electrolyte.

### Effect of the Invention

According to the invention it is possible to achieve further improvement in the electric power generation properties of fuel cells comprising polymer electrolyte membranes that employ hydrocarbon-based polymer electrolytes.

Furthermore, using hydrocarbon-based polymer electrolytes has the advantage of lowering cost and increasing heat resistance, in addition to eliminating the problem of fluorine ion discharge associated with using common fluorine-based polymer electrolytes.

### Brief Description of the Drawings

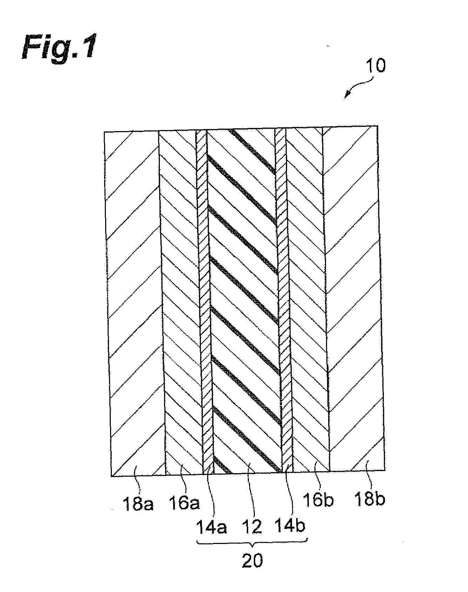

Fig. 1 is a cross-sectional view showing an embodiment of a fuel cell.

### Explanation of Symbols

10: Fuel cell, 12: polymer electrolyte membrane, 14a: anode catalyst layer, 14b: cathode catalyst layer, 16a, 16b: gas diffusion layers, 18a, 18b: separators, 20: membrane-electrode assembly (MEA).

### Best Modes for Carrying Out the Invention

Preferred embodiments of the invention will now be described in detail. However, the present invention is not limited to the embodiments described below.

Fig. 1 is a cross-sectional view showing an embodiment of a fuel cell. The fuel cell 10 shown in Fig. 1 is a solid polymer fuel cell comprising a membrane-electrode assembly (hereinafter also referred to as "MEA") 20 constructed from a polymer electrolyte membrane 12, and a mutually opposing anode catalyst layer 14a and cathode catalyst layer 14b sandwiching the polymer electrolyte membrane 12. The fuel cell 10 further comprises gas diffusion layers 16a, 16b and separators 18a, 18b formed on each of the catalyst layers 14a, 14b, in that order from the inside.

When the fuel is hydrogen gas, protons and electrons are produced from hydrogen supplied to the anode catalyst layer 14a, and the protons that are produced migrate through the polymer electrolyte membrane 12 to the cathode catalyst layer 14b, resulting in production of water from the protons, oxygen and electrons in the cathode catalyst layer 14b.

The anode catalyst layer 14a and cathode catalyst layer 14b are catalyst layers comprising a catalyst-supported material, having at least one particulate catalyst substance selected from among platinum and platinum-containing alloys and a support on which the catalyst substance is supported, and a polymer electrolyte.

As platinum-containing alloys there may be used any selected from among those used in the field of fuel cells. As specific examples of preferred alloys there may be mentioned platinum-rare metal alloys such as platinum-ruthenium alloy and platinum-cobalt alloy.

As supports to support the catalyst substance there may be mentioned carbon supports and ceramic supports. Carbon supports such as conductive carbon black or carbon nanotubes are preferred for easier transport of electrons in the catalyst layer. Titanium oxide may be mentioned as a ceramic support.

The catalyst-supporting ratio of the catalyst-supported material is the proportion (wt%) of the platinum with respect to the total weight of the catalyst substance and support. Either or both the anode catalyst layer 14a and cathode catalyst layer 14b, and preferably both, have a catalyst-supporting ratio of 60 wt% or greater. From the viewpoint of improving the electric power generation properties, the catalyst-supporting ratio is preferably 70 wt% or greater. The catalyst-supporting ratio is also preferably no greater than 95 wt% and more preferably no greater than 80 wt%. The catalyst-supporting ratio of the anode catalyst layer 14a and cathode catalyst layer 14b may be the same or different.

The catalyst-supported material can be obtained, for example, by a production method comprising a step in which the catalyst substance precursor is added to a support dispersion containing a support and a dispersing medium in which it is dispersed, to adsorb the precursor onto the support, and a step in which the precursor adsorbed onto the support is converted to a catalyst substance using a reducing agent such as hydrazine to obtain a catalyst-supported material comprising the catalyst substance and the support supporting the catalyst substance. The catalyst substance precursor may be, for example, chloroplatinic acid or a chloroplatinate. By adjusting the proportion of the support and the catalyst substance precursor, it is possible to obtain a catalyst-supported material with a catalyst-supporting ratio of 60 wt% or greater. The catalyst-supported material obtained by this method may be purified by filtration if necessary, and dried. If necessary, the catalyst-supported material may also be subjected to heat treatment.

Alternatively, a commercial product may be used as the catalyst-supported material. Commercially available catalyst-supported materials having catalyst-supporting ratios of 60 wt% and greater can be acquired from E-TEK, for example. Such commercial products may be used directly or after drying treatment or the like as necessary.

A polymer electrolyte that can carry out ion conduction is used in the anode catalyst layer 14a and cathode catalyst layer 14b. The polymer electrolytes in the anode catalyst layer 14a and cathode catalyst layer 14b function to mediate exchange of ions between the catalyst substance and polymer electrolyte membrane 12, and they are usually selected so as to conduct the same ion as the polymer electrolyte in the polymer electrolyte membrane 12. The polymer electrolytes also function as binders to bind the catalyst-supported material.

The anode catalyst layer 14a and cathode catalyst layer 14b both comprise at least one polymer electrolyte selected from among hydrocarbon-based polymer electrolytes and fluorine-based polymer electrolytes. The polymer electrolytes in the anode catalyst layer 14a and cathode catalyst layer 14b are preferably hydrocarbon-based polymer electrolytes. In this case, the catalyst layers 14a, 14b may contain small amounts of polymer electrolytes other than hydrocarbon-based polymer electrolytes, but their amounts are preferably less than 50 wt% based on the weight of the hydrocarbon-based polymer electrolyte.

The hydrocarbon-based polymer electrolytes are ionic conductive polymer compounds, and they contain hydrocarbons as the main components with essentially no halogen atoms such as fluorine atoms. Specifically, the amount of halogen atoms in each hydrocarbon-based polymer electrolyte is no greater than 15 wt% based on the weight of the entire hydrocarbon-based polymer electrolyte. The hydrocarbon-based polymer electrolyte has a main chain composed mainly of a hydrocarbon. However, the main chain of the hydrocarbon-based polymer electrolyte may also contain heteroatoms such as oxygen, sulfur, nitrogen, phosphorus and silicon.

The hydrocarbon-based polymer electrolyte comprises acidic groups or basic groups as the ion-exchange groups. The ion-exchange groups are preferably acidic groups. Using a hydrocarbon-based polymer electrolyte with acidic groups can yield a fuel cell with even more excellent electric power generation performance. As examples of acidic groups for the hydrocarbon-based polymer electrolyte there may be mentioned acidic groups selected from among sulfonic acid (-SO₃H), carboxyl (-COOH), phosphonic acid (-PO₃H₂), phosphinic acid (-OPO₃H₂), sulfonylimide (-SO₂NHSO₂-) and phenolic hydroxyl groups. Preferred among these as acidic groups are sulfonic acid and phosphonic acid groups, with sulfonic acid groups being especially preferred.

As representative examples of hydrocarbon-based polymer electrolytes there may be mentioned the following (A), (B), (C), (D) and (E).
(A) Hydrocarbon-based polymer electrolytes having a molecular chain composed of an aliphatic hydrocarbon and a sulfonic acid and/or phosphonic acid group bonded to the molecular chain.
(B) Hydrocarbon-based polymer electrolytes having a molecular chain with an aromatic group and optionally with a heteroatom such as oxygen, and a sulfonic acid and/or phosphonic acid group bonded to the molecular chain.
(C) Hydrocarbon-based polymer electrolytes having a molecular chain composed of a polymer with an aliphatic hydrocarbon-containing repeating unit and an inorganic repeating unit such as a siloxane or phosphazene group, and a sulfonic acid and/or phosphonic acid group bonded to the molecular chain.
(D) Hydrocarbon-based polymer electrolytes having a main chain comprising two or more molecular chains selected from among molecular chains comprising aliphatic hydrocarbons, molecular chains with aromatic groups and optionally with a heteroatom and molecular chains composed of a polymer comprising an aliphatic hydrocarbon-containing repeating unit and an inorganic repeating unit, and a sulfonic acid and/or phosphonic acid group bonded to the main chain.
(E) Hydrocarbon-based polymer electrolytes having a nitrogen atom-containing main chain or side chain and an acidic compound such as sulfuric acid or phosphoric acid introduced by ionic bonding onto the main chain or side chain.

As examples of the (A) hydrocarbon-based polymer electrolytes there may be mentioned polyvinylsulfonic acid, polystyrenesulfonic acid and poly(α-methylstyrene)sulfonic acid.

As examples of the (B) hydrocarbon-based polymer electrolytes there may be mentioned homopolymers selected from among polyetherether ketone, polysulfone, polyethersulfone, poly(arylene ethers), polyimide, poly((4-phenoxybenzoyl)-1,4-phenylene), polyphenylene sulfide and polyphenylquinoxalene, having sulfonic acid groups introduced therein, sulfoarylated polybenzimidazoles, sulfoalkylated polybenzimidazoles, phosphoalkylated polybenzimidazoles (see Japanese Unexamined Patent Publication HEI No. 9-110982, for example), and phosphonated poly(phenylene ethers) (see J. Appl. Polym. Sci., 18, 1969(1974), for example).

As examples of the (C) hydrocarbon-based polymer electrolytes there may be mentioned the sulfonic acid group-introduced polyphosphazenes described in the literature (Polymer Prep., 41, No.1, 70(2000)). A (C) hydrocarbon-based polymer electrolyte can be easily produced as a phosphonic acid group-containing polysiloxane.

The main chain in a (D) hydrocarbon-based polymer electrolyte may be a random copolymer, or an alternating copolymer or block copolymer. As examples of random copolymers with sulfonic acid groups introduced therein there may be mentioned the sulfonated polyethersulfone polymers mentioned in Japanese Unexamined Patent Publication HEI No. 11-116679.

As examples of the (E) hydrocarbon-based polymer electrolytes there may be mentioned the phosphoric acid-containing polybenzimidazoles mentioned in Japanese Patent Public Inspection HEI No. 11-503262.

The anode catalyst layer 14a and cathode catalyst layer 14b preferably each independently comprise at least one hydrocarbon-based polymer electrolyte selected from the group consisting of (A), (B), (C), (D) and (E) above. Hydrocarbon-based polymer electrolytes selected from (B) and (D) are preferred among these, from the viewpoint of achieving both high electric power generation performance and greater durability. Of the examples mentioned above, aromatic-based polymer electrolytes which are polymers with an aromatic group-containing main chain are preferred from the viewpoint of heat resistance and easier recycling. The polymer electrolyte used in the polymer electrolyte membrane 12 will usually be an aromatic-based polymer electrolyte that is soluble in solvents, so as to easily form a membrane of the desired thickness by a known solution casting method. The acidic groups of the aromatic-based polymer electrolyte may be directly bonded to the aromatic groups of the main chain of the polymer, or they may be bonded via divalent linking groups such as alkylene groups. They may also be bonded in a combination of such forms.

In the main chain of an aromatic-based polymer electrolyte, for example, divalent aromatic groups may be directly linked as in polyarylenes, or divalent aromatic groups may be linked via divalent groups. As divalent groups to link the aromatic groups there may be mentioned oxy (-O-), thioxy (-S-), carbonyl, sulfinyl, sulfonyl, amide (-NH-CO- or -CO-NH-), ester (-O-CO- or -CO-O-), carbonic acid ester (-O-CO-O-), approximately C1-4 alkylene, approximately C1-4 fluorine-substituted alkylene, approximately C2-4 alkenylene and approximately C2-4 alkynylene groups. As divalent aromatic groups in the main chain of the aromatic-based polymer electrolyte there may be mentioned aromatic groups such as phenylene, naphthalenediyl, anthracenylene and fluorenediyl, and aromatic heterocyclic groups such as pyridinediyl, furanediyl, thiophenediyl, imidazolyl, indolediyl and quinoxalinediyl.

A divalent aromatic group in the aromatic-based polymer electrolyte may have the aforementioned acidic groups, and it may optionally have other substituents. As specific examples of substituents for aromatic groups there may be mentioned C1-20 alkyl, C1-20 alkoxy, C6-20 aryl, C6-20 aryloxy, nitro, and halogen atoms. When the aromatic-based polymer electrolyte has a halogen atom as a substituent bonded to the aromatic group, or when it has a fluorine-substituted alkylene group as a divalent group linking the aromatic groups, the compositional ratio of halogen atoms is no greater than 15 wt% as the compositional ratio by elemental weight in the aromatic-based polymer electrolyte.

As representative examples of fluorine-based polymer electrolytes to form the anode catalyst layer 14a and cathode catalyst layer 14b, there may be mentioned fluorine-based polymer electrolytes having a molecular chain comprising an aliphatic hydrocarbon group with all or a portion of the hydrogens replaced with fluoro groups, and a sulfonic acid and/or phosphonic acid group bonded to the molecular chain. Commercial products which are such fluorine-based polymer electrolytes include Nafion (registered trademark of Dupont Corp.), Aciplex (registered trademark of Asahi Kasei Corp.), and Flemion (registered trademark of Asahi Glass Co., Ltd.).

As additional examples of fluorine-based polymer electrolytes there may be mentioned sulfonic acid-type polystyrene-graft-ethylene-tetrafluoroethylene copolymer (ETFE) composed of a main chain produced by copolymerization between a fluorine-based vinyl carbide monomer and a hydrocarbon-based vinyl monomer, and hydrocarbon-based side chains with sulfonic acid groups, which is described in Japanese Unexamined Patent Publication HEI No. 9-102322, and sulfonic acid-type poly(trifluorostyrene)-graft-ETFE films obtained by graft polymerization of α,β,β-trifluorostyrene onto a copolymer produced by copolymerization between a fluorine-based vinyl carbide monomer and a hydrocarbon-based vinyl monomer and introduction of sulfonic acid groups to produce a solid polymer electrolyte membrane, which are described in USP 4,012,303 and USP 4,605,685.

Thus, although either hydrocarbon-based polymer electrolytes or fluorine-based polymer electrolytes, or a combination thereof, may be used as polymer electrolytes to form the catalyst layers, because fluorine-based polymer electrolytes are relatively expensive, the polymer electrolyte in the catalyst layer preferably consists essentially of a hydrocarbon-based polymer electrolyte.

The weight ratio of the polymer electrolyte with respect to the support that supports the catalyst substance in the anode catalyst layer 14a is preferably 0.05-1.4. The weight ratio of the polymer electrolyte with respect to the support that supports the catalyst substance in the cathode catalyst layer 14b is preferably 0.05-1.4. If the polymer electrolyte weight ratio is within the numerical range specified above, even more excellent electric power generation properties can be obtained.

The other components in the anode catalyst layer 14a and cathode catalyst layer 14b may be as desired, without any particular restrictions. For example, the catalyst layers may contain additives selected from among water-repellent materials such as PTFE used to increase the water-repellency of the catalyst layer, pore-forming materials such as calcium carbonate used to increase the gas diffusibility of the catalyst layer, and stabilizers such as metal oxides used to increase the durability of the MEA.

The thickness of the anode catalyst layer 14a is preferably no greater than 30 µm. The thickness of the cathode catalyst layer 14b is also preferably no greater than 30 µm. Because the catalyst-supporting ratio is high in this embodiment, it is possible to reduce the thickness of each catalyst layer while maintaining the basis weight per unit area of the catalyst substance, and it is therefore superior from this standpoint as well. Reducing the catalyst layer is advantageous for downsizing the fuel cell, while it also improves the electric power generation properties.

The anode catalyst layer 14a and cathode catalyst layer 14b are preferably formed by a method using a catalyst ink that comprises a catalyst substance and a support that supports it, a polymer electrolyte, and a solvent in which these are dispersed or dissolved. This method has advantages of being convenient, and allowing easier control of the amount of catalyst substance in each catalyst layer to be formed. The term "catalyst ink" is widely used in the field and refers to a solution composition used to form a catalyst layer.

The following methods (a), (b) and (c), for example, may be used as methods for forming the MEA by a step of using a catalyst ink to form the catalyst layer.
(a) A method in which the catalyst ink is directly coated onto the polymer electrolyte membrane surface and the solvent is removed from the coated catalyst ink.
(b) A method in which the catalyst ink is directly coated onto a base serving as the gas diffusion layer, such as carbon paper, the solvent is removed from the coated catalyst ink to obtain a laminated body comprising the base and the catalyst layer, the laminated body is then situated with its catalyst layer side contacting the polymer electrolyte membrane and the entirety is contact bonded by pressing or the like.
(c) A method in which the catalyst ink is directly coated onto a support base such as a poly(tetrafluoroethylene) film or polyimide film, the solvent is removed from the coated catalyst ink to obtain a laminated body comprising the support base and the catalyst layer, the laminated body is then situated with its catalyst layer side contacting the polymer electrolyte membrane and the entirety is contact bonded by pressing or the like to contact the polymer electrolyte membrane and the catalyst layer, after which the support base alone is released.

Method (a) is preferred among these methods. According to method (a) it is possible to achieve firm adhesion between the polymer electrolyte membrane and catalyst layer in the obtained MEA, and to obtain a solid polymer fuel cell with more excellent electric power generation properties. According to method (b) it is possible to obtain an MEA having the gas diffusion layer laminated on the side of the catalyst layer opposite the polymer electrolyte membrane side. An assembly composed of a polymer electrolyte membrane 12, anode catalyst layer 14a, cathode catalyst layer 14b and gas diffusion layer 16a, 16b is often referred to as a membrane-electrode-gas diffusion layer assembly (MEGA).

The catalyst ink preferably contains a solvent selected from among water and hydrophilic solvents, a catalyst substance and a polymer electrolyte, wherein at least a portion of the polymer electrolyte is dispersed in the solvent. Such a catalyst ink can be prepared by, for example, a method comprising a step of preparing a polymer electrolyte solution comprising the polymer electrolyte dissolved in an organic solvent, a step of replacing the organic solvent of the polymer electrolyte solution with a solvent selected from among water and hydrophilic solvents, to obtain an emulsion, and a step of adding a catalyst-supported material to the emulsion. The solvent is preferably water or a mixture of water and an alcohol. The concentration of the polymer electrolyte in the emulsion is preferably 0.1-5 wt%. A dispersion in which solid particles of the polymer electrolyte are dispersed may be used instead of an emulsion.

The means for coating the catalyst ink may be a known coating method employing a die coater, screen printing, spraying method or an ink-jet. Spraying method is preferred among these methods. Spraying method is particularly preferred for the method of (a) above. That is, the catalyst ink is preferably coated onto the polymer electrolyte membrane by spraying.

The polymer electrolyte membrane 12 is a membrane formed from a hydrocarbon-based polymer electrolyte and other components added as necessary. The MEA exhibits excellent electric power generation performance due to the synergistic effect resulting from the combination of the polymer electrolyte membrane 12 comprising a hydrocarbon-based polymer electrolyte, and the anode catalyst layer 14a and cathode catalyst layer 14b which comprise catalyst-supported materials with catalyst-supporting ratios of 60 wt% or greater.

As hydrocarbon-based polymer electrolytes for the polymer electrolyte membrane 12 there may be used, for example, one or more selected from among those mentioned for the anode catalyst layer 14a and cathode catalyst layer 14b. The hydrocarbon-based polymer electrolyte of the polymer electrolyte membrane 12 may be the same as or different from the hydrocarbon-based polymer electrolytes of the anode catalyst layer 14a and cathode catalyst layer 14b.

A hydrocarbon-based polymer electrolyte suitable for forming the polymer electrolyte membrane 12 will now be explained in detail. When the hydrocarbon-based polymer electrolyte is formed into a membrane, it preferably forms a phase separation structure (preferably a microphase separation structure) with a first domain and a second domain, wherein the first domain has a higher ion-exchange group concentration than the second domain. The first domain with the high ion-exchange group concentration contributes primarily to proton conductivity, while the domain with low ion-exchange group concentration contributes primarily to mechanical strength.

A microphase separation structure is a form in which the domain width, or identity pitch of the first and second domains is between several nm and several 100 nm. The identity pitch is preferably 5 nm-100 nm. Formation of a microphase separation structure can be confirmed, for example, by observing the formed hydrocarbon-based polymer electrolyte with a transmission electron microscope (TEM).

The hydrocarbon-based polymer electrolyte forming a membrane with a microphase separation structure may be a block copolymer or graft copolymer having a first block composed of repeating units with ion-exchange groups, and second blocks composed essentially of repeating units with no ion-exchange groups. Such hydrocarbon-based polymer electrolytes are preferred for use because their different polymer blocks are bonded by chemical bonds, whereby they readily produce microphase separation on the order of the molecular chain size. Block copolymers are most preferably used.

The first block in the preferred block copolymers mentioned above contains an average of at least 0.5 ion-exchange groups per repeating unit composing the block. The first block more preferably contains an average of at least 1.0 ion-exchange groups per repeating unit. The second block may also contain a small number of repeating units with ion-exchange groups, in a range such that a microphase separation structure is still formed. Specifically, the number of ion-exchange groups in the second block is normally an average of less than 0.5 per repeating unit composing the block. The number of ion-exchange groups in the second block is more preferably no greater than an average of 0.1 and even more preferably no greater than an average of 0.05 per repeating unit.

As typical examples of preferred block copolymers there may be mentioned block copolymers having the aromatic polyether structure described in Japanese Unexamined Patent Publication No. 2005-126684 and Japanese Unexamined Patent Publication No. 2005-139432, comprising a block composed of a repeating unit with ion-exchange groups and a block essentially composed of a repeating unit with no ion-exchange groups. The block copolymers comprising a polyarylene block with acidic groups, described in International Patent Publication No. WO2006/95919 already disclosed by the present applicant, can be used as hydrocarbon-based polymer electrolytes to form polymer electrolyte membranes with high levels of both ionic conductivity and water resistance. A synergistic effect between the aromatic-based polymer electrolyte and the catalyst layer with a specific catalyst-supporting ratio can result in an MEA with more excellent electric power generation properties.

As representative examples of block copolymers that may be suitably used as hydrocarbon-based polymer electrolytes, there may be mentioned the block copolymers represented by chemical formulas (1a), (1b) and (1c) below. In the formulas, n and m each represent number of repeating units. The label "block" in the formulas indicates formation of a block copolymer having blocks composed of each repeating unit.

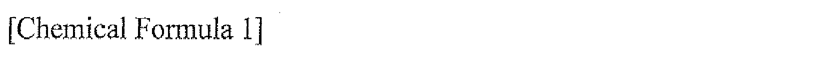

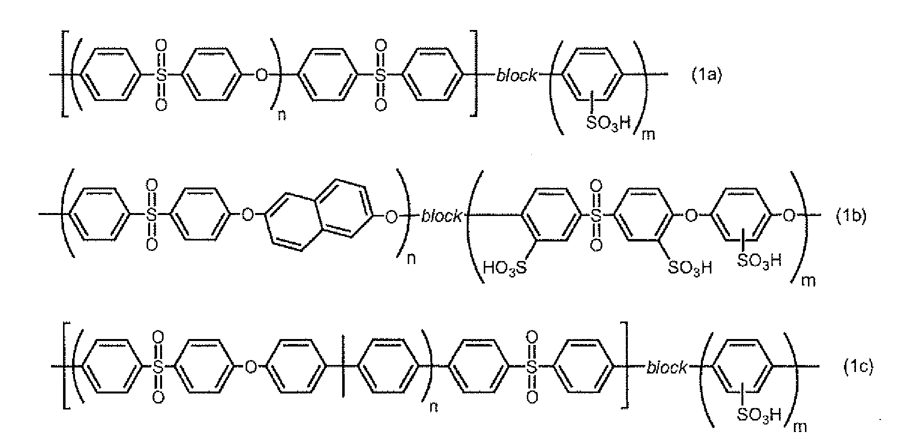

The optimal range for the molecular weight of the hydrocarbon-based polymer electrolyte may be appropriately determined according to the structure, but the number-average molecular weight based on polystyrene is preferably 1000-1000000, according to GPC (gel permeation chromatography). The number-average molecular weight is preferably at least 5000 and more preferably at least 10000. The number-average molecular weight is also preferably no greater than 800000 and more preferably no greater than 500000.

The polymer electrolyte membrane 12 may contain other components in addition to the hydrocarbon-based polymer electrolytes, depending on the desired properties and in ranges that do not significantly reduce the proton conductivity. As such other components there may be mentioned additives such as plasticizers, stabilizers, release agents and humectants that are ordinarily used in polymer materials. Stabilizers are most preferably included, in order to increase the chemical stability including oxidation resistance and/or radical resistance. During operation of the fuel cell, the peroxides produced in the catalyst layer are converted to radical species while diffusing in the polymer electrolyte membrane adjacent to the catalyst layer, thus causing deterioration of the hydrocarbon-based polymer electrolyte composing the polymer electrolyte membrane, and stabilizers help inhibit this deterioration. If the polymer electrolyte membrane 12 contains a stabilizer which minimizes such deterioration, it is possible to avoid such inconvenience. Preferred stabilizers are aromatic phosphonic acids comprising the structure represented by the following general formula (2), that have been already discovered and disclosed in Japanese Unexamined Patent Publication No. 2003-282096 by the present applicant.

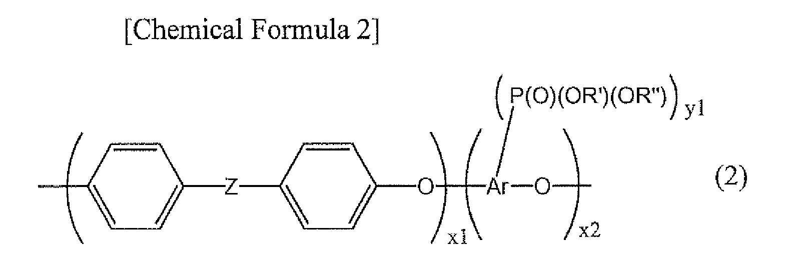

In the formula, Z represents -SO₂- or -CO-, and x1 and x2 are numerical values in the range of 0.01-0.99 representing the polymerization ratio of each repeating unit based on the total number of repeating units in the entire aromatic phosphonic acid. Ar represents a C4-18 divalent aromatic group optionally containing a hetero element and optionally having a substituent. The symbol y1 is a positive integer representing the average number of groups represented by P(O)(OR')(OR") bonded to Ar, and it is preferably no greater than 8. R' and R" each independently represent hydrogen atom or an alkyl group.

The pattern of copolymerization of the repeating unit in the aforementioned aromatic phosphonic acids is not particularly restricted and may be random copolymerization, alternating copolymerization or block copolymerization, but alternating copolymerization or random copolymerization is the preferred copolymerization pattern for easier production. The P(O)(OR')(OR") groups are also preferably phosphonic acid groups (where both R' and R" are hydrogen atoms). When the group represented by P(O)(OR')(OR") is a phosphonic acid group and the compositional ratio of halogen atoms is no greater than 15 wt%, such aromatic phosphonic acids are included among hydrocarbon-based polymer electrolytes. The symbol x1 is preferably 0.60-0.90 and more preferably 0.70-0.90.

The aromatic phosphonic acids mentioned above contain two repeating units as essential components, as represented in general formula (2) above, but they may also contain other repeating units. For example, they may contain small amounts of a repeating unit represented by the following general formula (2a).

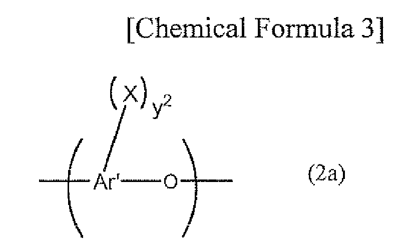

In formula (2a), X represents a halogen atom, and Ar' represents a C4-18 divalent aromatic group optionally containing a hetero element. The symbol y² represents the number of X substituents per repeating unit of the polymer portion containing Ar', and y² is a positive integer of no greater than 8. When several X substituents are present, they may be the same or different.

The thickness of the polymer electrolyte membrane 12 is preferably no greater than 29 µm, more preferably no greater than 25 µm and even more preferably no greater than 20 µm, from the viewpoint of improving the electric power generation properties. From the viewpoint of ensuring mechanical strength, on the other hand, the thickness of the polymer electrolyte membrane 12 is preferably at least 10 µm. The thickness of the polymer electrolyte membrane 12 can be measured using means such as a microgauge, in an environment with a temperature of 23°C and a relative humidity of 50% RH.

For increased mechanical strength, the polymer electrolyte membrane 12 may be a composite membrane obtained by compositing the electrolyte composition comprising the polymer electrolyte, with a prescribed support. The support may be, for example, a base material with a fibril form or porous membrane form.

The polymer electrolyte membrane 12 may be formed, for example, by a solvent casting method which employs a polymer electrolyte solution. The polymer electrolyte solution may be coated onto a base such as a glass panel to form a polymer electrolyte membrane on the base, and the base then released. Alternatively, the polymer electrolyte solution may be coated onto the catalyst layer to form a polymer electrolyte membrane on the catalyst layer.

The catalyst-supporting ratio of the catalyst layer composing an MEA fabricated in this manner can be determined by the following method, for example, when the support is a carbon support. Specifically, the catalyst layers 14a, 14b are released with a cutter, and the released catalyst layers 14a, 14b are rinsed with an organic solvent to remove the soluble components and then heated to about 600°C in an air atmosphere, to remove the resin component in the catalyst layer by thermal decomposition. The remaining residue is rinsed and dried, and the residue of the drying (dry residue) is measured out to the prescribed weight and heated in aqua regalis at about 80-150°C to dissolve the platinum in the aqua regalis. The aqua regalis dissolving the platinum is then diluted if necessary and the platinum concentration is quantitated by ICP-MS. This platinum concentration is used as the basis to determine the platinum weight in a prescribed weight of dry residue. Also, by heating the dry residue in air at 800°C, it is possible to burn the carbon material and determine the weight of the carbon support from the weight reduction. The platinum and carbon support contents determined in this manner may in turn be used to determine the platinum content in the catalyst-supported material, i.e. the catalyst-supporting ratio.

The gas diffusion layers 16a, 16b are formed sandwiching the MEA 20 on either side, and they function to promote diffusion of source gas to the anode catalyst layer 14a and cathode catalyst layer 14b. The gas diffusion layers 16a, 16b are preferably conductive porous bodies. A porous carbon nonwoven fabric or carbon paper is preferably used, for example.

The separators 18a, 18b are preferably formed from conductive materials. As examples of conducting materials to form the separators there may be mentioned carbon, resin mold carbon, titanium and stainless steel. On the gas diffusion layer 16a, 16b sides of the separators 18a, 18b there are formed grooves as fluid channels for supply of source gas, though these are not shown in the drawing. A fuel gas such as hydrogen is supplied through the groove in the separator 18a on the anode side, while an oxidant gas such as oxygen is supplied through the groove in the separator 18b on the cathode side.

The fuel cell 10 may be produced, for example, by a method comprising a step of obtaining the MEGA and a step of sandwiching the MEGA with a pair of separators 18a, 18b and bonding them together.

The fuel cell 10 may be used after sealing with a gasket or the like, for example. A plurality of individual fuel cells 10 may also be used in series as a fuel cell stack. When the fuel is hydrogen, the fuel cell 10 can operate as a solid polymer fuel cell, and when the fuel is aqueous methanol it can operate as a direct methanol-type fuel cell.

### Example 1

The present invention will now be explained in greater detail through the following examples, with the understanding that these examples are in no way limitative on the invention.

### 1. Measurement of molecular weight

The number-average molecular weights and weight-average molecular weights of the polymer electrolytes were determined by gel permeation chromatography (GPC) measurement under the following conditions and calculation based on polystyrene.

### GPC conditions

· Column: 1 TSKgel GMHHHR-M by Tosoh Corp.
· Column temperature: 40°C
· Mobile phase solvent: N,N-dimethylformamide (containing 10 mmol/dm³ LiBr)
· Solvent flow rate: 0.5 mL/min

### 2. Measurement of ion-exchange capacity

A polymer electrolyte solution was formulated by dissolving a mixture of the polymer electrolyte as sample in dimethyl sulfoxide (DMSO) to a concentration of about 10-30 wt%. The polymer electrolyte solution was coated onto a glass plate and then dried at 80°C under ordinary pressure to obtain a polymer electrolyte membrane. The obtained membrane was immersed in 2N hydrochloric acid for 2 hours, and then rinsed with ion-exchanged water to convert the ion-exchange groups in the polymer electrolyte membrane to their protonated forms. A halogen moisture content meter was then used for drying at 105°C, and the absolute dry weight of the polymer electrolyte membrane converted to protonated form was determined. The polymer electrolyte membrane was then immersed in 5 mL of aqueous 0.1 mol/L sodium hydroxide, and 50 mL of ion-exchanged water was further added and the mixture was allowed to stand for 2 hours. The solution in which the polymer electrolyte membrane had been immersed was then subjected to titration by gradual addition of 0.1 mol/L hydrochloric acid, to determine the neutralization point. The ion-exchange capacity (IEC) of the polymer electrolyte membrane was calculated from the absolute dry weight of the polymer electrolyte membrane and the amount of hydrochloric acid required for the neutralization.

### 3. Polymer electrolyte for polymer electrolyte membrane

### (Synthesis of polymer electrolyte 1)

Polymer electrolyte 1 represented by chemical formula (1c) above was obtained according to the method described in Example 1 of WO2006/095919. The weight-average molecular weight was 2.3 × 10⁵, the number-average molecular weight was 1.1 × 10⁵ and the IEC was 2.2 meq/g.

### (Synthesis of additives)

### Synthesis of polymer "a"

A 2 L separable flask equipped with a reduced pressure azeotropic distillation apparatus was substituted with nitrogen, and then 63.40 g of 4,4'-dichlorodiphenylsulfone, 70.81 g of 4,4'-dihydroxybiphenyl and 955 g of N-methyl-2-pyrrolidone were added and a homogeneous solution was formed. Next, 92.80 g of potassium carbonate was added and dewatering under reduced pressure was carried out at 135°C-150°C for 4.5 hours while distilling off the NMP. After then adding 200.10 g of dichlorodiphenylsulfone, reaction was conducted at 180°C for 21 hours.

Upon completion of the reaction, the reaction mixture was added dropwise into methanol and the precipitated solid was recovered by filtration. The recovered solid was rinsed with methanol, rinsed with water, rinsed with hot methanol and then dried to obtain 275.55 g of polymer "a". The structure of polymer "a" is shown below. Polymer "a" had a weight-average molecular weight of 18000 according to GPC based on polystyrene, and the q/p ratio, determined from the integral in NMR measurement, was q:p = 7:3. The label "random" in the following formula indicates that each repeating unit was randomly copolymerized.

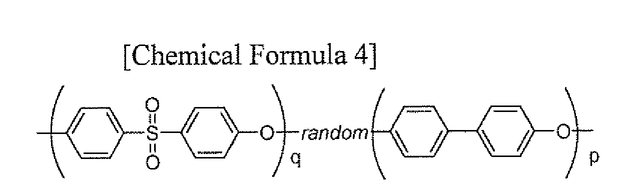

### Synthesis of polymer "b"

A 2 L separable flask was substituted with nitrogen, and then 1014.12 g of nitrobenzene and 80.00 g of polymer "a" were added and a homogeneous solution was formed. Next, 50.25 g of N-bromosuccinimide was added and the mixture was cooled to 15°C. After then adding 106.42 g of 95% concentrated sulfuric acid dropwise over a period of 40 minutes, reaction was conducted at 15°C for 6 hours. After 6 hours, 450.63 g of 10 wt% aqueous sodium hydroxide and 18.36 g of sodium thiosulfate were added while cooling to 15°C. The solution was then added dropwise into methanol and the precipitated solid was filtered and recovered. The recovered solid was rinsed with methanol, rinsed with water, re-rinsed with methanol and then dried to obtain 86.38 g of polymer "b". The bromine content and molecular weight of the obtained polymer "b" were analyzed, giving the results shown below.
Bromine content: 19.5 wt%
Number-average molecular weight: 7.7 × 10³
Weight-average molecular weight: 1.1 × 10⁴

### Synthesis of polymer "c"

A 2 L separable flask equipped with a reduced pressure azeotropic distillation apparatus was substituted with nitrogen, and then 116.99 g of dimethylformamide and 80.07 g of polymer "b" were added and a homogeneous solution was formed. The mixture was then dewatered under reduced pressure for 5 hours while distilling off the dimethylformamide. After 5 hours it was cooled to 50°C, 41.87 g of nickel chloride was added, the temperature was increased to 130°C, and 69.67 g of triethyl phosphite was added dropwise for reaction at 140°C-145°C for 2 hours. After 2 hours, an additional 17.30 g of triethyl phosphite was added and reaction was conducted at 145°C-150°C for 3 hours. After 3 hours the mixture was cooled to room temperature, a mixture of 1161 g of water and 929 g of ethanol was added dropwise, and the precipitated solid was filtered and recovered. Water was added to the recovered solid, and the mixture was thoroughly pulverized, rinsed with 5 wt% aqueous hydrochloric acid and rinsed with water to obtain 86.83 g of polymer "c".

### Synthesis of polymer "d" (stabilizer)

A 5 L separable flask was substituted with nitrogen, and then 1200 g of 35 wt% hydrochloric acid, 550 g of water and 75.00 g of polymer "c" were added and the mixture was stirred at 105°C-110°C for 15 hours. After 15 hours, the reaction mixture that had been cooled to room temperature was added dropwise to 1500 g of water. The solid in the system was then filtered and recovered, and the obtained solid was rinsed with water and then with hot water. Upon drying, 72.51 g of the target polymer "d" was obtained. The phosphorus content based on elemental analysis of polymer "d" was 5.1 wt%, and the value of x (number of phosphonic acid groups for each biphenyleneoxy group) was 1.6, based on elemental analysis. Polymer "d" was used as a stabilizer for formation of the polymer electrolyte membrane. The bromine content and molecular weight of the obtained polymer "d" were analyzed, giving the results shown below.
Bromine content: 0.1 wt%
Number-average molecular weight: 1.4 × 10⁴
Weight-average molecular weight: 2.2 × 10⁴

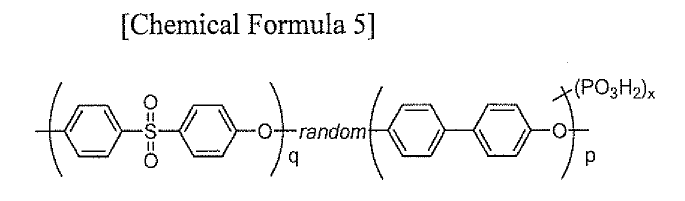

### 4. Fabrication of polymer electrolyte membrane

A polymer electrolyte solution was formulated by dissolving a mixture of the polymer electrolyte 1 and additive obtained as described above (polymer electrolyte 1:additive = 90:10, weight ratio) in DMSO to a concentration of about 10 wt%. The polymer electrolyte solution was then dropped onto a glass plate. A wire coater was used to evenly spread the polymer electrolyte solution onto the glass plate. A wire coater with a 0.5 mm clearance was used during this time to control the coating thickness. After coating the polymer electrolyte solution, it was dried at 80°C under ordinary pressure. The obtained membrane was then immersed in 1 mol/L hydrochloric acid and then rinsed with ion-exchanged water, and further dried at ordinary temperature to obtain a polymer electrolyte membrane with a thickness of 30 µm.

### 5. Polymer electrolyte dispersion for catalyst layer

### (1) Polymer electrolyte emulsion 1

### Synthesis of polymer compound with sulfonic acid groups

After placing 9.32 parts by weight of dipotassium 4,4'-difluorodiphenylsulfone-3,3'-disulfonate, 4.20 parts by weight of potassium 2,5-dihydroxybenzenesulfonate, 59.6 parts by weight of DMSO and 9.00 parts by weight of toluene under an argon atmosphere in a flask equipped with an azeotropic distillation apparatus, the mixture was stirred at room temperature while bubbling in argon gas for 1 hour.

Next, 2.67 parts by weight of potassium carbonate was added to the mixture and stirring was continued while heating at 140°C for azeotropic dehydration. Heating was subsequently continued while distilling off the toluene, to obtain a DMSO solution containing a polymer compound with sulfonic acid groups. The total heating time was 14 hours. The obtained solution was allowed to cool to room temperature.

### Synthesis of polymer compound with essentially no ion-exchange groups

After placing 8.32 parts by weight of 4,4'-difluorodiphenylsulfone, 5.36 parts by weight of 2,6-dihydroxynaphthalene, 30.2 parts by weight of DMSO, 30.2 parts by weight of NMP and 9.81 parts by weight of toluene under an argon atmosphere in a flask equipped with an azeotropic distillation apparatus, the mixture was stirred at room temperature while bubbling in argon gas for 1 hour.

Next, 5.09 parts by weight of potassium carbonate was added to the mixture and heated stirring was continued at 140°C for azeotropic dehydration. Heating was subsequently continued while distilling off the toluene. The total heating time was 5 hours. The obtained solution was allowed to cool to room temperature to obtain an NMP/DMSO mixed solution containing a polymer compound with essentially no ion-exchange groups.

### Synthesis of black copolymer

The NMP/DMSO mixture containing the polymer compound with essentially no ion-exchange groups obtained as described above was stirred while adding the total amount of the DMSO solution containing the polymer compound with sulfonic acid groups, 80.4 parts by weight of NMP and 45.3 parts by weight of DMSO, and the mixture was heated at 150°C for 40 hours for block copolymerization reaction.

The reaction mixture was dropped into a large amount of 2N hydrochloric acid and the produced precipitate was left immersed for 1 hour. The precipitate was then filtered out and re-immersed in 2N hydrochloric acid for 1 hour. The precipitate was filtered and rinsed with water, and then immersed in a large amount of hot water at 95°C for 1 hour. The precipitate was filtered and dried by heating at 80°C for 12 hours, to obtain polymer electrolyte 2 as a block copolymer represented by chemical formula (1b) above. The results for measurement of the molecular weight and IEC of the obtained polymer electrolyte 2 are shown below.
IEC: 1.7 meq/g
Number-average molecular weight: 1.4 × 10⁵
Weight-average molecular weight: 3.5 × 10⁵

Polymer electrolyte 2 obtained above was dissolved in 1-methyl-2-pyrrolidone to a concentration of 1.0 wt% to prepare 100 g of a polymer electrolyte solution. The 100 g of polymer electrolyte solution was added dropwise into 900 g of distilled water using a buret at a dropping rate of 3-5 g/min to dilute the polymer electrolyte solution. The dispersing medium of the diluted polymer electrolyte solution was exchanged with running water for 72 hours using a dialysis membrane dialyzing cellulose tube (trade name: UC36-32-100 by Sanko Junyaku Co., Ltd., molecular cutoff: 14000). The dispersing medium-exchanged polymer electrolyte solution was concentrated to 2.2 wt% using an evaporator to obtain polymer electrolyte emulsion 1 as an emulsion containing the polymer electrolyte 2.

### (2) Polymer electrolyte emulsion 2

In a 200 mL flask equipped with a Dean-Stark tube there were added 4.00 g (16.06 mmol) of sodium 2,5-dichlorobenzenesulfonate, 7.24 g (46.38 mmol) of 2,2'-bipyridyl, 1.51 g of polyethersulfone having chloro groups on both ends, represented by formula (7) below (trade name: "SUMIKA EXCEL PES 5200P", product of Sumitomo Chemical Co., Ltd.), 533 mg (1.61 mmol) of 1-(4-bromobenzyloxy)-2,5-dichlorobenzene, 100 mL of dimethyl sulfoxide and 35 mL of toluene, and the mixture was subjected to azeotropic dehydration under reduced pressure at 100°C for 9 hours under an argon atmosphere, after which the toluene was distilled off out of the system and the mixture was allowed to cool to 70°C. Next, 11.60 g (42.16 mmol) of Ni(cod)₂ was added at once at 70°C. Immediately after addition of the Ni(cod)₂, the temperature was raised to 85°C and the bath temperature was kept constant while stirring. At about 5 minutes after addition of the Ni(cod)₂, the polymerization solution gelled and stirring was continued for 30 minutes. The obtained gel-like polymerization solution was poured into methanol, and then methanol rinsing/filtration of the crosslinked aromatic polymer was repeated 3 times, rinsing with 6 mol/L aqueous hydrochloric acid/filtration was repeated 3 times, and rinsing/filtration was repeated with deionized water until the filtrate became neutral, after which it was dried at 80°C to obtain 3.86 g of a solid crosslinked aromatic polymer. Next, 1.40 g of the solid crosslinked aromatic polymer was pulverized for 5 minutes with a sample mill and then mixed with 149 g of deionized water, and a step of pulverizing for 20 minutes using a homogenizer (trade name: Ultrasonic Homogenizer US-150T by Nissei Corp.) was repeated 3 times until the precipitate was no longer visible, to obtain a 0.9 wt% polymer electrolyte emulsion 2.

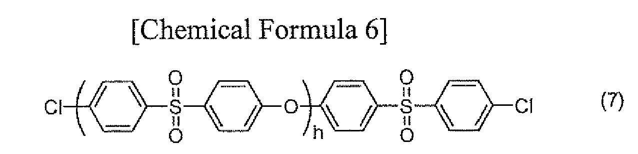

### (3) Polymer electrolyte emulsion 3

The polymer electrolyte 1 was dissolved in dimethyl sulfoxide (DMSO) to a concentration of 1.0 wt% to prepare 100 g of a polymer electrolyte solution. The 100 g of polymer electrolyte solution was added dropwise into 900 g of distilled water using a buret at a dropping rate of 3-5 g/min to dilute the polymer electrolyte solution. The dispersing medium of the diluted polymer electrolyte solution was exchanged with running water for 72 hours using a dialysis membrane dialyzing cellulose tube (trade name: UC36-32-100 by Sanko Junyaku Co., Ltd., molecular cutoff: 14000). The dispersing medium-exchanged polymer electrolyte solution was concentrated to 1.0 wt% using an evaporator to obtain polymer electrolyte emulsion 3 containing the polymer electrolyte 1.

### 6. Fabrication and evaluation of fuel cells

### (Example 1)

### Preparation of catalyst ink 1 (for anode)

After measuring 0.25 g of platinum-supporting carbon (platinum supporting ratio: 70 wt%) into a flask containing stirrer chips, 2.29 g of water and 15.13 g of ethanol were added to the flask and 1.70 g of the polymer electrolyte emulsion 1 was further added to the flask. The flask was allowed to stand for 1 hour in an ultrasonic cleaning device, and then stirred for 5 hours with a stirrer to obtain catalyst ink 1.

### Preparation of catalyst ink 2 (for cathode)

After measuring 0.50 g of platinum-supporting carbon (platinum supporting ratio: 70 wt%) into a flask containing stirrer chips, 4.18 g of water and 28.25 g of ethanol were added to the flask and 2.68 g of the polymer electrolyte emulsion 2 was further added to the flask. The flask was allowed to stand for 1 hour in an ultrasonic cleaning device, and then stirred for 5 hours with a stirrer to obtain catalyst ink 2.

### Fabrication of MEA 1

Catalyst ink 1 was coated by spraying onto a 5.2 cm-square region at the center of one side of polymer electrolyte membrane 1 fabricated in the manner described above. The distance was 6 cm from the discharge slit to the membrane, and the stage temperature was set to 75°C. After recoating in the same manner, the solvent was removed to form an anode catalyst layer. The anode catalyst layer was coated to a solid content of 0.34 mg/cm² (platinum basis weight: 0.21 mg/cm²). Next, catalyst ink 2 was coated in the same manner on the other side to form a cathode catalyst layer, thus obtaining MEA 1. The cathode catalyst layer was coated to a solid content of 0.87 mg/cm² (platinum basis weight: 0.54 mg/cm²).

### Assembly of fuel cell

A commercially available JARI standard cell was used to produce a fuel cell. On both sides of the obtained MEA 1 there were situated a carbon cloth as a gas diffusion layer and a carbon separator with a gas channel groove cut therein, and then a collector and end plate were situated in that order on the outer sides and clamped with a bolt to assemble a fuel cell with an effective membrane area of 25 cm².

### Evaluation of electric power generation properties

The obtained fuel cell was kept at 80°C while supplying humidified hydrogen to the anode and humidified air to the cathode catalyst layer side. The back pressure at the gas outlet of the cell was adjusted to 0.1 MPaG. Each source gas was humidified by passing gas through a water-containing bubbler, with a water temperature of 80°C in the hydrogen bubbler and a water temperature of 80°C in the air bubbler. The hydrogen gas flow rate was 529 mL/min and the air gas flow rate was 1665 mL/min. The value of the current density was measured when the voltage reached 0.4 V, giving a value of 1.94 A/cm².

### (Example 2)

### Fabrication of MEA 2

Catalyst ink 1 was coated by spraying onto a 5.2 cm-square region at the center of one side of polymer electrolyte membrane 1 fabricated in the manner described above. The distance was 6 cm from the discharge slit to the membrane, and the stage temperature was set to 75°C. After recoating in the same manner, the solvent was removed to form an anode catalyst layer. The anode catalyst layer was coated to a solid content of 0.76 mg/cm² (platinum basis weight: 0.47 mg/cm²). Next, catalyst ink 2 was coated in the same manner on the other side to form a cathode catalyst layer, thus obtaining META 2. The cathode catalyst layer was coated to a solid content of 1.01 mg/cm² (platinum basis weight: 0.68 mg/cm²).

### Assembly and evaluation of fuel cell

Fuel cell assembly and evaluation of the electric power generation properties were carried out in the same manner as Example 1, using MEA 2. As a result, the value for the current density at a voltage of 0.4 V was 1.86 A/cm².

### (Example 3)

### Preparation of catalyst ink 3 (for anode)

After placing 0.5 g of platinum-supporting carbon black (C1-70 by E-TEK), with the platinum supported at 68.3 wt%, in a stirrer chip-containing flask, 2.0 g of water and 13.9 g of ethanol were added to the flask and then 7.5 g of polymer electrolyte emulsion 3 mentioned above was further added to the flask. The flask was allowed to stand for 1 hour in an ultrasonic cleaning device, and then stirred for 5 hours with a stirrer to obtain catalyst ink 3.

### Preparation of catalyst ink 4 (for cathode)

After placing 0.5 g of platinum-supporting carbon black (C1-70 by E-TEK), with the platinum supported at 68.3 wt%, in a stirrer chip-containing flask, 2.5 g of water and 16.9 g of ethanol were added to the flask and then 2.6 g of polymer electrolyte emulsion 3 mentioned above was further added to the flask. The flask was allowed to stand for 1 hour in an ultrasonic cleaning device, and then stirred for 5 hours with a stirrer to obtain catalyst ink 2.

### Fabrication of MEA 3

MEA 2 was fabricated in the same manner as Example 1, except that catalyst inks 3 and 4 were used instead of catalyst inks 1 and 2. The solid content of the anode catalyst layer was 0.24 mg/cm² (platinum basis weight: 0.16 mg/cm²) and the solid content of the cathode catalyst layer was 1.13 mg/cm² (platinum basis weight: 0.60 mg/cm²).

### Assembly and evaluation of fuel cell

MEA 3 was used to fabricate a fuel cell and evaluate the electric power generation properties in the same manner as Example 1. As a result, the value for the current density at a voltage of 0.4 V was 1.86 A/cm².

### (Example 4)

### Preparation of catalyst ink 5 (for anode)

After measuring 0.5 g of platinum-supporting carbon black (C1-70 by E-TEK) with platinum supported at 68.3 wt% and 0.2 g of platinum-supporting carbon black (SA50BK by N.E. Chemcat) with platinum supported at 51.0% into a stirrer chip-containing flask, 1.9 g of water and 12.8 g of ethanol were added to the flask and then 9.3 g of polymer electrolyte emulsion 3 was further added to the flask. The flask was allowed to stand for 1 hour in an ultrasonic cleaning device, and then stirred for 5 hours with a stirrer to obtain catalyst ink 5.

### Preparation of catalyst ink 6 (for cathode)

After measuring 0.5 g of platinum-supporting carbon black (C1-70 by E-TEK) with platinum supported at 68.3 wt% and 0.2 g of platinum-supporting carbon black (SA50BK by N.E. Chemcat) with platinum supported at 51.0% into a stirrer chip-containing flask, 2.5 g of water and 16.9 g of ethanol were added to the flask and then 3.2 g of polymer electrolyte emulsion 3 was further added to the flask. The flask was allowed to stand for 1 hour in an ultrasonic cleaning device, and then stirred for 5 hours with a stirrer to obtain catalyst ink 6 (catalyst-supporting ratio: 62 wt%).

### Fabrication of MEA 4

MEA 4 was fabricated in the same manner as Example 1, except that catalyst inks 5 and 6 were used instead of catalyst inks 1 and 2. The solid content of the anode catalyst layer was 0.29 mg/cm² (platinum basis weight: 0.16 mg/cm²) and the solid content of the cathode catalyst layer was 1.10 mg/cm² (platinum basis weight: 0.60 mg/cm²).

### Assembly and evaluation of fuel cell

MEA 4 was used to fabricate a fuel cell and evaluate the electric power generation properties in the same manner as Example 1. As a result, the value for the current density at a voltage of 0.4 V was 1.89 A/cm².

### (Example 5)

### Preparation of catalyst ink 7

After measuring 0.6 g of platinum-supporting carbon (platinum supporting ratio: 70 wt%) into a flask containing stirrer chips, 3.88 g of water and 26.19 g of ethanol were added to the flask, and then 1.7 g of a 5 wt% Nafion solution (solvent: mixture of water and lower alcohol) was further added to the flask. The flask was allowed to stand for 1 hour in an ultrasonic cleaning device, and then stirred for 5 hours with a stirrer to obtain catalyst ink 7.

### Fabrication of MEA 5

MEA 5 was fabricated in the same manner as Example 1, except that catalyst ink 7 was used instead of catalyst inks 1 and 2. The solid contents of the anode catalyst layer and cathode catalyst layer were *** (platinum basis weight: 0.60 mg/cm²).

### Assembly and evaluation of fuel cell

MEA 5 was used to fabricate a fuel cell and evaluate the electric power generation properties in the same manner as Example 1. As a result, the value for the current density at a voltage of 0.4 V was 1.83 A/cm².

### (Example 6)

### Preparation of catalyst ink 8 (for anode)

After placing 0.5 g of platinum-supporting carbon black (SA50BK by N.E. Chemcat), with the platinum supported at 51.0%, in a stirrer chip-containing flask, 3.0 g of water and 20.2 g of ethanol were added to the flask, and 1.7 g of polymer electrolyte emulsion 3 mentioned above was further added to the flask. The flask was allowed to stand for 1 hour in an ultrasonic cleaning device, and then stirred for 5 hours with a stirrer to obtain catalyst ink 8.

### Preparation of catalyst ink 9 (for cathode)

After placing 0.5 g of platinum-supporting carbon black (C1-70 by E-TEK), with the platinum supported at 68.3 wt%, in a stirrer chip-containing flask, 2.5 g of water and 16.9 g of ethanol were added to the flask and then 2.6 g of polymer electrolyte emulsion 3 mentioned above was further added to the flask. The flask was allowed to stand for 1 hour in an ultrasonic cleaning device, and then stirred for 5 hours with a stirrer to obtain catalyst ink 9.

### Fabrication of MEA 6

MEA 6 was fabricated in the same manner as Example 1, except that catalyst inks 8 and 9 were used instead of catalyst inks 1 and 2. The solid content of the anode catalyst layer was 0.38 mg/cm² (platinum basis weight: 0.16 mg/cm²) and the solid content of the cathode catalyst layer was 1.13 mg/cm² (platinum basis weight: 0.60 mg/cm²).

### Assembly and evaluation of fuel cell

MEA 6 was used to fabricate a fuel cell and evaluate the electric power generation properties in the same manner as Example 1. As a result, the value for the current density at a voltage of 0.4 V was 1.99 A/cm².

### (Comparative Example 1)

### Preparation of catalyst ink 10 (for anode)

After measuring 0.50 g of platinum-supporting carbon (product of N.E. Chemcat, platinum supporting ratio: 51 wt%) into a flask containing stirrer chips, 2.87 g of water and 18.97 g of ethanol were added to the flask, and then 2.48 g of polymer electrolyte emulsion 1 was further added to the flask. The flask was allowed to stand for 1 hour in an ultrasonic cleaning device, and then stirred for 5 hours with a stirrer to obtain catalyst ink 10.

### Preparation of catalyst ink 11 (for cathode)

After measuring 0.50 g of platinum-supporting carbon (product of N.E. Chemcat, platinum supporting ratio: 51 wt%) into a flask containing stirrer chips, 2.51 g of water and 16.98 g of ethanol were added to the flask, and then 3.98 g of polymer electrolyte emulsion 2 was further added to the flask. The flask was allowed to stand for 1 hour in an ultrasonic cleaning device, and then stirred for 5 hours with a stirrer to obtain catalyst ink 11.

### Fabrication of MEA 7

MEA 7 was fabricated in the same manner as Example 1, except that catalyst ink 10 was used instead of catalyst ink 1 and catalyst ink 11 was used instead of catalyst ink 2. The anode side was coated to a solid content of 0.67 mg/cm² (platinum basis weight: 0.30 mg/cm²). The cathode side was coated to a solid content of 1.17 mg/cm² (platinum basis weight: 0.55 mg/cm²).

The obtained MEA 7 was used to assemble a fuel cell and evaluate the electric power generation properties in the same manner as Example 1. As a result, the value for the current density at a voltage of 0.4 V was 0.71 A/cm².

### (Comparative Example 2)

### Preparation of catalyst ink 12 (for anode)

After loading 0.5 g of platinum-supporting carbon black (SA50BK by N.E. Chemcat) supporting platinum at 51.0% into 1.7 g of a 5 wt% Nafion solution (solvent: mixture of water and lower alcohol), there were further added 3.0 g of water and 20.9 g of ethanol. The obtained mixture was subjected to ultrasonic treatment for 1 hour and then stirred for 5 hours with a stirrer to obtain catalyst ink 12.

### Preparation of catalyst ink 13 (for cathode)

After loading 0.5 g of platinum-supporting carbon black (SA50BK by N.E. Chemcat) supporting platinum at 51.0% into 0.6 g of a 5 wt% Nafion solution (solvent: mixture of water and lower alcohol), there were further added 2.8 g of water and 19.1 g of ethanol. The obtained mixture was subjected to ultrasonic treatment for 1 hour and then stirred for 5 hours with a stirrer to obtain catalyst ink 13.

### Fabrication of MEA 8

MEA 8 was fabricated in the same manner as Example 1, except that catalyst inks 12 and 13 were used instead of catalyst inks 1 and 2. The solid content of the anode catalyst layer was 0.38 mg/cm² (platinum basis weight: 0.16 mg/cm²) and the solid content of the cathode catalyst layer was 1.27 mg/cm² (platinum basis weight: 0.60 mg/cm²).

### Assembly and evaluation of fuel cell

MEA 8 was used to fabricate a fuel cell and evaluate the electric power generation properties in the same manner as Example 1. As a result, the value for the current density at a voltage of 0.4 V was 0.44 A/cm².

**[Table 1]**

| | Polymer electrolyte membrane | Anode | | Cathode | | |
|---|---|---|---|---|---|---|
| | | Catalyst supporting ratio [%] | Polymer electrolyte in catalyst layer | Catalyst supporting ratio [%] | Polymer electrolyte in catalyst layer | Current density @0.4V [A/cm²] |
| Example 1 | Hydrocarbon -based polymer electrolyte | 70 | Hydrocarbon -based polymer electrolyte | 70 | Hydrocarbon -based polymer electrolyte | 1.94 |
| Example 2 | Hydrocarbon -based polymer electrolyte | 70 | Hydrocarbon -based Polymer electrolyte | 70 | Hydrocarbon -based polymer electrolyte | 1.86 |
| Example 3 | Hydrocarbon -based polymer electrolyte | 68 | Hydrocarbon -based polymer electrolyte | 68 | Hydrocarbon -based polymer electrolyte | 1.86 |
| Example 4 | Hydrocarbon -based polymer electrolyte | 62 | Hydrocarbon -based polymer electrolyte | 62 | Hydrocarbon -based polymer electrolyte | 1.89 |
| Example 5 | Hydrocarbon -based polymer electrolyte | 70 | Fluorine-based polymer electrolyte | 70 | Fluorine-bas ed polymer electrolyte | 1.83 |
| Example 6 | Hydrocarbon -based polymer electrolyte | 51 | Hydrocarbon -based polymer electrolyte | 68 | Hydrocarbon -based Polymer electrolyte | 1.99 |
| Comp. Ex.1 | Hydrocarbon -based polymer electrolyte | 51 | Hydrocarbon -based Polymer electrolyte | 51 | Hydrocarbon -based polymer electrolyte | 0.71 |
| Comp. Ex.2 | Hydrocarbon -based polymer electrolyte | 51 | Fluorine-based polymer electrolyte | 51 | Fluorine-bas ed polymer electrolyte | 0.44 |

The construction of each fuel cell and the durability evaluation results are shown in Table 1. The experimental results shown in Table 1 confirmed that fuel cells comprising polymer electrolyte membranes that employ hydrocarbon-based polymer electrolytes according to the invention have markedly improved electric power generation properties.

## Claims

1. A membrane-electrode assembly comprising an anode catalyst layer and cathode catalyst layer placed opposite each other, and a polymer electrolyte membrane formed between the anode catalyst layer and cathode catalyst layer,
wherein the polymer electrolyte membrane comprises a hydrocarbon-based polymer electrolyte,
the anode catalyst layer and cathode catalyst layer comprise: a catalyst-supported material, having at least one catalyst substance selected from among platinum and platinum-containing alloys and a support on which the catalyst substance is supported; and a polymer electrolyte, and
the catalyst-supporting ratio of the catalyst-supported material in either or both the anode catalyst layer and cathode catalyst layer is 60 wt% or greater.

2. A membrane-electrode assembly according to claim 1, wherein the hydrocarbon-based polymer electrolyte in the polymer electrolyte membrane is a block copolymer comprising a first block composed of a repeating unit with an ion-exchange group, and a second block composed essentially of a repeating unit with no ion-exchange group.

3. A membrane-electrode assembly according to claim 1, wherein the polymer electrolytes in the anode catalyst layer and cathode catalyst layer are hydrocarbon-based polymer electrolytes.

4. A method for producing a membrane-electrode assembly according to any one of claims 1 to 3,
the method comprising a step of forming an anode catalyst layer and/or cathode catalyst layer using catalyst ink containing a solvent selected from among water and hydrophilic solvents, a catalyst substance and a hydrocarbon-based polymer electrolyte, wherein at least a portion of the hydrocarbon-based polymer electrolyte is dispersed in the solvent.

5. The method according to claim 4, wherein in the step of forming the anode catalyst layer and/or cathode catalyst layer, the anode catalyst layer and/or cathode catalyst layer is formed by a method of directly coating the catalyst ink onto the polymer electrolyte membrane by spraying and removing the solvent from the coated catalyst ink.

6. A solid polymer fuel cell comprising a membrane-electrode assembly according to any one of claims 1 to 3.
